# EUROPEAN PATENT APPLICATION

(11) **EP 3 800 853 A1**
(43) Date of publication of application: **07.04.2021**
(21) Application number: 19827386.4
(22) Date of filing: 27.02.2019
(51) Int. Cl.: H04L 29/06

(54) **ADDRESS MANAGEMENT METHOD AND DEVICE**

(30) Priority: 29.06.2018 CN 201810712572
(71) Applicant: HUAWEI TECHNOLOGIES CO., LTD., Shenzhen, Guangdong 518129 (CN)
(72) Inventor: MENG, Jinhua, Shenzhen, Guangdong 518129 (CN); CAO, Feng, Shenzhen, Guangdong 518129 (CN); JI, Yeyi, Shenzhen, Guangdong 518129 (CN)
(74) Representative: Thun, Clemens
(86) International application number: PCT/CN2019/076221
(87) International publication number: WO 2020/001045

(57) **Abstract**

Embodiments of this application provide an address management method and apparatus, and relate to the communications field. The method includes: assigning, by a DHCP server, an IP address to a target client; detecting, within a lease term, whether the client is online; and reclaiming, after detecting that the client is offline, the IP address assigned to the client. In this application, IP address resources can be effectively used, thereby improving utilization of the IP address resources.

## Description

This application claims priority to Chinese Patent Application No. CN 201810712572.0, filed with the Chinese Patent Office on June 29, 2018 and entitled "ADDRESS MANAGEMENT METHOD AND APPARATUS", which is incorporated herein by reference in its entirety.

### TECHNICAL FIELD

Embodiments of this application relate to the communications field, and in particular, to an address management method and apparatus.

### BACKGROUND

Currently, a method for assigning an internet protocol (Internet Protocol, IP) address by using a dynamic host configuration protocol (Dynamic Host Configuration Protocol, DHCP) server includes: broadcasting, by a client, a DHCP-DISCOVER packet to determine a DHCP server that assigns an IP address. The DHCP server that receives the DHCP-DISCOVER packet assigns the IP address to the client and returns a DHCP-OFFER packet carrying the IP address to the client. The client selects one IP address from a plurality of received IP addresses and sends, in a broadcast manner, a DHCP-REQUEST packet carrying the selected IP address. After determining that a DHCP server that receives the DHCP-REQUEST packet has stored a lease record corresponding to the IP address in the DHCP-REQUEST packet, the DHCP server that receives the DHCP-REQUEST packet sends a DHCP-ACK packet to the client, to notify the client that the IP address selected by the client can be used. When a lease corresponding to the IP address used by the client expires or after receiving a DHCP-RELEASE packet sent by the client, the DHCP server reclaims the IP address used by the client.

When the DHCP server fails to effectively obtain a status of using the IP address by the client, the DHCP server that still assigns an address continues lease timing for the IP address assigned to the client. Therefore, IP address resources cannot be effectively used.

### SUMMARY

Embodiments of this application provide an address management method and apparatus, to help effectively use IP address resources.

To achieve the foregoing objective, this application uses the following technical solutions.

According to a first aspect, an address management method is provided. The method includes: assigning, by a DHCP server, an IP address and a lease term to a client; detecting, by the DHCP server within the lease term, whether the client is online; and reclaiming, by the DHCP server after detecting that the client is offline, the IP address assigned to the client.

In the foregoing method, after the DHCP server assigns the IP address and the lease term to the client, when it is determined that the lease term does not expire and the client does not use the assigned IP address, the DHCP server can reclaim the IP address assigned to the client. In this way, the DHCP server can monitor the IP address used by the client in real time, and actively reclaim the IP address when the client does not use the assigned IP address, thereby improving availability of a resource of the IP address in an address pool of the DHCP server.

In a first optional implementation of the first aspect, the detecting, by the DHCP server within the lease term, whether the client is online includes: determining, by the DHCP server, that a detection condition is triggered within the lease term, and sending a ping packet to the client, where a destination address of the ping packet is the IP address assigned by the DHCP server to the client; and determining, by the DHCP server, that the client is offline if a ping reply packet returned by the client is not received within a preset time. Alternatively, the detecting, by the DHCP server within the lease term, whether the client is online includes: determining, by the DHCP server, that a detection condition is triggered within the lease term, and sending an address resolution protocol (Address Resolution Protocol, ARP) packet to the client; and determining, by the DHCP server, that the client is offline if an ARP reply packet returned by the client is not received within a preset time. By using the foregoing manner, the DHCP server actively detects whether the client is online, so that the status of using the IP address by the client can be obtained in time.

In a second optional implementation of the first aspect, the determining, by the DHCP server, that a detection condition is triggered within the lease term includes: when a renewal packet sent by the client is not received at a renewal moment in the lease term, determining, by the DHCP server, that the detection condition is triggered within the lease term; or when a current moment is a preset detection time point in the lease term, determining, by the DHCP server, that the detection condition is triggered within the lease term, where the preset detection time point is a start moment of the lease term or any moment in the lease term. By using the foregoing manner, a process of detecting whether the client is online is started at a specified moment or the preset detection time point, for example, when a renewal time expires but the renewal packet is not received.

In a third optional implementation of the first aspect, after the assigning, by a DHCP server, an IP address and a lease term to a client based on address request information sent by the client, the method further includes: updating, by the DHCP server, a status of the IP address assigned to the client and stored in the DHCP server to unavailable; or setting, by the DHCP server, the IP address assigned to the client and stored in the DHCP server to a high priority. By using the foregoing manner, a use status and a status of the priority that are of the IP address in the address pool of the DHCP server are updated in real time, to improve flexibility for assigning the IP address.

In a fourth optional implementation of the first aspect, after the reclaiming, by the DHCP server after detecting that the client is offline, the IP address assigned to the client, the method further includes: after the IP address assigned to the client is reclaimed, updating, by the DHCP server, a status of the IP address assigned to the client and stored in the DHCP server to available; or after the IP address assigned to the client is reclaimed, setting, by the DHCP server, the IP address assigned to the client and stored in the DHCP server to a low priority. By using the foregoing design, after assigning an IP address that has a higher priority and that is in the address pool, the DHCP server assigns an IP address having a lower priority, thereby avoiding a possible unexpected assignment error while improving utilization of the IP address in the address pool of the DHCP server.

According to a second aspect, an address management apparatus is provided. The apparatus may include an assignment module, a detection module, and a reclaim module. The assignment module is configured to assign an IP address and a lease term to a client. The detection module is configured to detect, within the lease period, whether the client is online. The determining module is configured to reclaim, after detecting that the client is offline, the IP address assigned to the client.

In a first optional implementation of the second aspect, the detection module is specifically configured to: determine that a detection condition is triggered within the lease term, and send a ping packet to the client, where a destination address of the ping packet is the IP address assigned by the assignment module to the client; and determine that the client is offline if a ping reply packet returned by the client is not received within a preset time. Alternatively, the detection module is specifically configured to: determine that a detection condition is triggered within the lease term, and send an address resolution protocol ARP packet to the client; and determine that the client is offline if an ARP reply packet returned by the client is not received within a preset time.

In a second optional implementation of the second aspect, the apparatus may further include a determining module. The determining module is configured to: when a renewal packet sent by the client is not received at a renewal moment in the lease term determine that the detection condition is triggered within the lease term. Alternatively, the determining module may further be configured to: when a current moment is a preset detection time point in the lease term, determine that the detection condition is triggered within the lease term, where the preset detection time point is a start moment of the lease term or any moment in the lease term.

In a third optional implementation of the second aspect, the apparatus further includes an update module. The update module is configured to update a status of the IP address assigned to the client and stored in the update module to unavailable, or the update module is configured to set the IP address assigned to the client and stored in the update module to a high priority.

In a fourth optional implementation of the second aspect, the apparatus further includes an update module. The update module is configured to: after the IP address assigned to the client is reclaimed update a status of the IP address assigned to the client and stored in the update module to available; or the update module is configured to: after the IP address assigned to the client is reclaimed set the IP address assigned to the client and stored in the update module to a low priority.

According to a third aspect, a computer-readable storage medium is provided. The computer-readable storage medium stores a computer program, the computer program includes code, and the code may be executed by a processor, to implement the method according to any one of the first aspect or the implementations of the first aspect.

According to a fourth aspect, a computer program is provided. When executed by a processor, the computer program implements the method according to any one of the first aspect or the implementations of the first aspect. The program may be all or partially stored in a storage medium that is encapsulated with the processor, or may be all or partially stored in a memory that is not encapsulated with the processor.

According to a fifth aspect, an address management apparatus is provided, including a memory and a processor. The memory is configured to store code, and the processor performs the method according to any one of the first aspect or the implementations of the first aspect based on the code read from the memory.

According to a sixth aspect, a processor is provided. The processor includes a circuit configured to assign an IP address to a target client, a circuit configured to detect, within a lease term, whether a client is online, and a circuit configured to reclaim, after detecting that the client is offline, the IP address assigned to the client. The processor may be a chip.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may further derive other accompanying drawings from these accompanying drawings without creative efforts.
FIG. 1 is a flowchart of an address management method;
FIG. 2 is a schematic diagram of an application scenario according to an embodiment of this application;
FIG. 3 is a flowchart of an address management method according to an embodiment of this application;
FIG. 4 is a schematic diagram of an application scenario according to an embodiment of this application;
FIG. 5 is a flowchart of an address management method according to an embodiment of this application;
FIG. 6 is a schematic structural diagram of an address management apparatus according to an embodiment of this application; and
FIG. 7 is a schematic structural diagram of an address management apparatus according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application.

The term "and/or" in this specification describes only an association relationship for describing associated objects and represents that three relationships may exist. For example, A and/or B may represent the following three cases: Only A exists, both A and B exist, and only B exists. In the specification and claims of the embodiments of this application, the terms "first", "second", and the like are used to distinguish between different objects but are not used to describe a particular order of the objects. For example, a first target object, a second target object, and the like are used to distinguish between different target objects, but are not used to describe a specific order of the target objects. In the embodiments of this application, the word such as "exemplary" or "for example" is used to represent giving an example, an illustration, or a description. Any embodiment or design scheme described as "exemplary" or "for example" in the embodiments of this application should not be explained as being more preferred or having more advantages than another embodiment or design scheme. Exactly, use of the word "exemplary", "for example", or the like is intended to present a relative concept in a specific manner. In the description of the embodiments of this application, unless otherwise stated, "a plurality of" means two or more than two. For example, a plurality of processing units refer to two or more processing units. A plurality of systems refer to two or more systems.

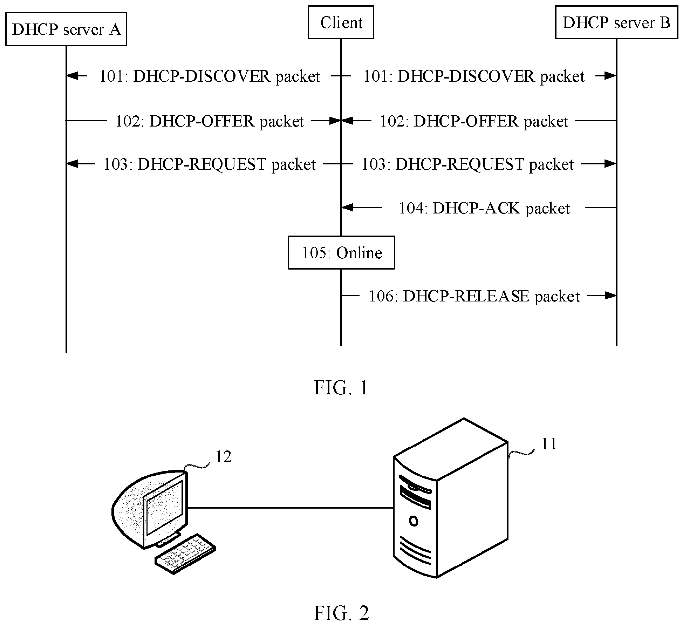

FIG. 1 shows an address management method, which is specifically as follows.

Step 101: A client broadcasts a DHCP-DISCOVER packet to DHCP servers in a network. The DHCP-DISCOVER packet carries identification information of the client. The identification information is used to uniquely identify the client. For example, the identification information may be a MAC address. Both a DHCP server A (referred to as the DHCP server A for short below) and a DHCP server B (referred to as the DHCP server B for short below) receive the packet (a plurality of DHCP servers may exist in the network, and the DHCP server A and the DHCP server B are merely used as an example for description herein).

Step 102: The DHCP server A and the DHCP server B each return a DHCP-OFFER packet to the client. Specifically, if the DHCP server A detects that there are available IP address resources in a local address pool, the DHCP server A returns the DHCP-OFFER packet to the client. The packet carries an IP address assigned to the client, the identification information of the client, lease information (including lease duration and renewal duration), and other information. A step performed by the DHCP server B is the same as a step performed by the DHCP server A. Details are not described herein again.

Step 103: The client broadcasts a DHCP-REQUEST packet. Specifically, the client can process only one of the received DHCP-OFFER packets. Therefore, a general principle is that the client processes the first received DHCP-OFFER packet. For example, the first DHCP-OFFER packet received by the client is a DHCP-OFFER packet sent by the DHCP server B. The client selects an IP address assigned by the DHCP server B as the IP address of the client. Then the client sends the DHCP-REQUEST packet in a broadcast manner, to notify the DHCP servers in the network of the IP address selected by the client and a DHCP server to which the client belongs. Specifically, the DHCP-REQUEST packet carries the selected IP address, an IP address of the DHCP server B, the identification information of the client, and the like.

Step 104: The DHCP server B returns a DHCP-ACK packet. Specifically, a DHCP server in the network that receives the DHCP-REQUEST packet determines whether the IP address carried in the packet exists in the local address pool. If the IP address carried in the packet does not exist in the local address pool, the DHCP server performs no processing but clear a corresponding IP address assignment record. In this example, if the DHCP server B detects that the IP address exists in the local address pool, the DHCP server B returns response information, namely, the DHCP-ACK packet, to the client. The packet carries the lease information of the IP address, the identification information of the client, and the IP address assigned to the client.

Step 105: After receiving the DHCP-ACK packet, the client checks whether the IP address assigned by the DHCP server B can be used. If the IP address can be used, the client obtains the IP address and goes online. If the client finds that the IP address has been used, the client sends a DHCP-Decline packet to the DHCP server, to notify the DHCP server B to disable the IP address. Then the client starts a new IP address request process.

After step 105, the method may further include step 106: When being offline, the client may send a DHCP-RELEASE packet to release the IP address of the client. After receiving the DHCP-RELEASE packet, the DHCP server B determines that the client is offline and reclaims the IP address assigned to the client.

In the foregoing solution, (1) after sending the DHCP-ACK packet, the DHCP server starts lease timing for the IP address based on lease information in the ACK packet. However, if the client fails to receive the DHCP-ACK packet due to a poor network connection or other reasons, the client cannot go online successfully. In other words, the client cannot use the address assigned by the DHCP server. In this case, the DHCP server continues the lease timing based on the lease information in the DHCP-ACK packet. As a result, the IP address assigned to the client is still unavailable and cannot be assigned to another client that newly accesses the network. (2) After the client goes offline unexpectedly, the client may not send the DHCP-RELEASE packet in time, or the DHCP-RELEASE packet fails to be sent to the DHCP server due to a poor network connection or another reason. In the foregoing two cases, the DHCP server does not perceive that the client goes offline, and continues the lease timing for the IP address. As a result, the IP address assigned to the client is still unavailable and cannot be assigned to another client that newly accesses the network.

To resolve a problem in the foregoing technical solution, an embodiment of this application provides an address management method, so that the IP address can be effectively used, and utilization of IP address resources can be improved.

FIG. 2 is a schematic diagram of an application scenario according to an embodiment of this application. The scenario shown in FIG. 2 includes a DHCP server 11 and a client 12. During specific implementation of the embodiments of this application, the client 12 may be a device such as a computer, a smartphone, a telephone set, or a cable television set-top box. It should be noted that in actual application, there may be one or more DHCP servers and one or more clients in a network. The application scenario shown in FIG. 2 is described by using an example of one client 12 and one DHCP server 11. With reference to the application scenario shown in FIG. 2, the following describes the embodiments of this application.

### Embodiment 1

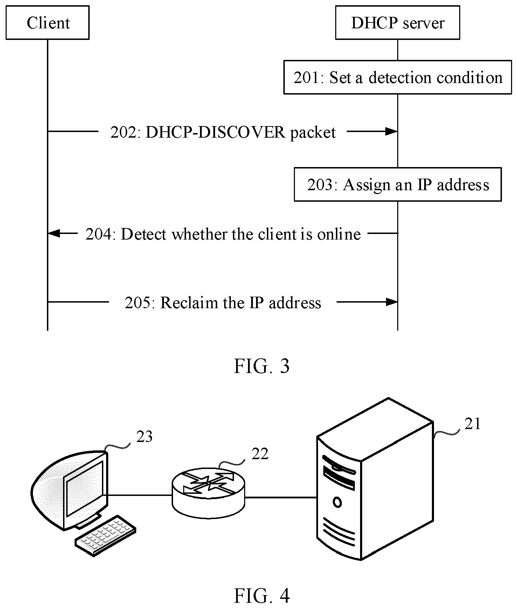

With reference to FIG. 2, FIG. 3 shows an address management method according to an embodiment of this application. In FIG. 3:
Step 201: Set a detection condition.

In this embodiment of this application, an operator may perform setting on a DHCP server in a network in advance, that is, set a configuration file. The DHCP server reads configuration content in the configuration file, and determines whether the detection condition is triggered.

In an embodiment, the detection condition may be set based on a renewal time. Specifically, the operator performs configuration on the DHCP server in advance. The configuration may be used to indicate that if the DHCP server fails to receive, at a moment when the renewal time arrives, a renewal packet sent by a client, the DHCP server determines that the detection condition is triggered, that is, starts detecting whether the client is online. The renewal packet carries a destination address, a source address, and renewal content. The destination address may be an address of the DHCP server. The source address is a media access control (Media Access Control, MAC) address of the client. The renewal content is used to indicate duration in which the client needs to renew a lease, and renewal duration is a multiple of a lease term. In other words, the renewal content explicitly indicates a quantity of lease terms in which the lease needs to be renewed. In an embodiment, the moment when the renewal time arrives may be a renewal deadline. For example, in an existing embodiment, if lease duration is 3 days and the renewal duration is 1.5 days, the DHCP server detects whether the renewal packet is received, from the 1.5^{th} day after the DHCP-ACK packet is sent, till the end of the second day (the second day after the lease starts). If the renewal packet is still not received in the second day, the DHCP server determines that the client does not renew the lease of the IP address. The second day in the example is the foregoing renewal deadline, and may be used as the moment when the renewal time arrives in this embodiment of this application.

In another embodiment, the detection condition may be set based on a specified time point. Specifically, a time point may be preset, and the DHCP server starts, at a moment when the specified time point arrives, to detect whether the client is online. The specified time point may be a start moment of the lease term, or may be any moment in the lease term.

Step 202: The client broadcasts a DHCP-DISCOVERY packet.

Step 203: A DHCP server assigns an IP address to the client based on the DHCP-DISCOVERY.

For details of steps 202 and 203, refer to related descriptions in the method corresponding to FIG. 1. Details are not described herein again.

In this embodiment of this application, a list of IP addresses may further be stored in the DHCP server. Status information of each IP address in the address pool of the DHCP server is recorded in the list of IP addresses. The status information includes a priority and a use status. In an embodiment, after assigning the IP address to the client, the DHCP server identifies the IP address that is assigned to the client and that is in the list of IP addresses as unavailable. To distinguish from another IP address in the DHCP server, in this embodiment of this application, the IP address assigned to the client is referred to as a target IP address. The IP address identified as unavailable in the list of IP addresses is not assigned to another client. Because the DHCP server cannot assign the IP address identified as unavailable, to another client, a priority of the IP address identified as unavailable may be ignored or set to null.

Step 204: The DHCP server detects, within a lease term, whether the client is online.

Specifically, in this embodiment of this application, after detecting that the detection condition specified in step 301 is triggered, the DHCP server starts a procedure of detecting whether the client is online.

In an embodiment, if the detection condition is set based on the renewal packet, the step of determining, by the DHCP server, whether the detection condition is triggered may specifically include: For example, the lease duration is 3 days, the renewal time is 1.5 days, and the renewal deadline is the second day (the second day after the lease starts). The DHCP server monitors, in real time from the moment when the renewal time corresponding to the IP address arrives, namely, the 1.5^{th} day, whether the renewal packet from the client is received. If the renewal packet is received before the end of the second day, it may be determined that the client is online. On the contrary, if the client does not receive the renewal packet before the end of the second day, the client may be in two states. First, the client is online, but the client does not renew the lease. Second, the client is offline unexpectedly or does not go online (that is, the DHCP-ACK packet is not received). Therefore, to further determine whether the client is in the latter state, the DHCP server needs to detect whether the client is online.

In another embodiment, if the detection condition is set based on a specified time point, the step of determining, by the DHCP server, whether the detection condition is triggered may specifically include: The DHCP server includes a time module, and the DHCP server may obtain a current time from the time module in real time. Then the DHCP server may determine, based on the obtained current time, whether the detection condition is triggered.

In this embodiment, if the specified time point is set to the start moment of the lease term, a problem that the client fails to receive the DHCP-ACK packet may be avoided. To be specific, after sending the DHCP-ACK packet, the DHCP server may start the process of detecting whether the client is online. If the specified time point is set to any moment in the lease term, a problem that the DHCP-RELEASE packet of the client fails to be sent to the DHCP server, or that the client goes offline unexpectedly and fails to send the DHCP-RELEASE packet in time may be avoided.

Still referring to FIG. 3, in an embodiment of this application, the DHCP server may use a packet Internet groper (Packet Internet Groper, ping) packet to detect whether the client is online. Specifically, the DHCP server may send the ping packet to the client, and after receiving the ping packet, the client returns a ping reply packet. After receiving the ping packet, the DHCP server may determine that the client is online, and does not perform any processing. Otherwise, if the DHCP server does not receive the ping reply packet, it is determined that the client is not online. In a possible embodiment, the DHCP server may send the ping reply packet for a plurality of times. To be specific, the DHCP server sends the ping packet for a plurality of times (for example, 10 times) to the client at specified intervals (for example, 1 ms). If the DHCP server receives at least one ping reply packet, the DHCP server may determine that the client is online. This can avoid incorrectly determining, due to a network latency and another reason, whether the client is online.

In another embodiment, the DHCP server may use an address resolution protocol (Address Resolution Protocol, ARP) packet to detect whether the client is online. In this embodiment, the ARP packet carries a source address, for example, an address (which may be an IP address) of the DHCP server, and a destination address, for example, an IP address that has been assigned to the client. Therefore, after receiving the ARP packet, the client may return an ARP reply packet to a device (namely, the DHCP server) corresponding to the source address based on the source address carried in the ARP packet. The process of using the ARP packet to detect whether the client is online is similar to that of using the ping packet to detect whether the client is online. Details are not described herein again.

Step 205: After detecting that the client is offline, the DHCP server reclaims the IP address assigned to the client.

Specifically, in this embodiment of this application, the DHCP server may determine, by using the foregoing method, whether the client is online. In an embodiment, if a detection result is that the client is online, the DHCP server does not perform any processing. In another embodiment, if the detection result is that the client is offline, the DHCP server determines to reclaim the IP address assigned to the client. In this embodiment of this application, that the client is "offline" may refer to a scenario in which the client fails to go online because the client fails to receive a DHCP-ACK message, or may refer to a scenario in which the client is offline but fails to send a DHCP-RELEASE message.

In addition, in this embodiment of this application, after the DHCP server reclaims the IP address assigned to the client (to distinguish from another IP address in the DHCP server, in this embodiment, the IP address assigned to the client is referred to as a target IP address), an unavailable state of the target IP address is released, and the DHCP server updates the use status of the target IP address in the list of IP addresses to available. In this case, the target IP address may be assigned to another client.

In this embodiment of this application, after reclaiming the target IP address, the DHCP server detects a current priority of the target IP address, and lowers, according to a priority rule of the list of IP addresses, a priority that is of the target IP address and that is recorded in the list of IP addresses. In this embodiment of this application, the DHCP server assigns IP addresses in the address pool in ascending order of respective priorities of the IP addresses. In this manner, a client that goes offline unexpectedly can use the previously assigned IP address again. For example, after reclaiming an IP address (10.1.1.11) of a client A, the DHCP server lowers a priority of 10.1.1.11 in the list of IP addresses. In this case, if another client requests an IP address assigned by the DHCP server, the DHCP server selects one of IP addresses having higher priorities (higher than the priority of 10.1.1.11), and assigns the IP address to the another client. The DHCP server assigns 10.1.1.11 to the another client only when all the IP addresses having higher priorities are assigned. In this embodiment of this application, after going online again, the client A may send a DHCP-REQUEST packet carrying the address 10.1.1.11 to the DHCP server, to request the DHCP server to assign 10.1.1.11 to the client A again. If the DHCP server detects that 10.1.1.11 exists in the address pool, the DHCP server assigns 10.1.1.11 to the client A again. If the DHCP server detects that 10.1.1.11 does not exist in the address pool, the DHCP server returns a DHCP-NAK packet to the client A, to indicate the client A to restart an IP address request procedure, to request another IP address. In this embodiment of this application, a priority is introduced, so that when a client goes offline unexpectedly and goes online again, the client can have an opportunity to use the previously assigned IP address again, thereby simplifying an IP address request procedure, effectively improving efficiency of assigning the IP address, and further improving user experience.

In an embodiment, priorities in the list of IP addresses may be in descending order based on an arrangement sequence. To be specific, a priority of an IP address at the first place in the list of IP addresses is the highest, and the priorities are in descending order, that is, a priority of an IP address at the last place in the list of IP addresses is the lowest. In this embodiment, the DHCP server may lower the priority of the target IP address in the following manner: placing the target IP address at the last place of the list of IP addresses, so that the priority of the target IP address is the lowest in all the IP addresses in the list of IP addresses. Accordingly, in this embodiment, in the process of assigning the IP address, the DHCP server assigns the IP address based on a priority sequence. To be specific, after receiving the DHCP-DISCOVERY packet, the DHCP server assigns, to the client, an IP address at the first place in IP addresses that are in an available state. An IP address at the last place is the IP address reclaimed in the solution in this embodiment of this application. After assigning all the IP addresses having higher priorities, the DHCP assigns IP addresses with lower priorities.

In another embodiment, the priorities in the list of IP addresses may be arranged based on a specific level. For example, each IP address in the list of IP addresses of the DHCP server may have a corresponding priority level, and a smaller number indicates a higher priority level. For example, if a priority level of 10.1.1.5 is 1, and a priority level of 10.1.1.6 is 2, the priority level of 10.1.1.6 is lower than that of 10.1.1.5. In this embodiment, after reclaiming 10.1.1.11 of the client A, the DHCP server adjusts a priority level of 10.1.1.11 to the lowest. If a number corresponding to the lowest priority level in the list of IP addresses is 20, the priority level of 10.1.1.11 is updated to 21. The foregoing examples are merely used to make a person in the art better understand the technical solutions in this application, and a priority setting method is not limited in this application.

In conclusion, according to the address management method in this embodiment of this application, the ping packet or the ARP packet is sent to the client, to actively detect whether the client is online, and reclaim the IP address assigned to the client when it is determined that the client is offline. In this way, the IP address can be effectively used, and utilization of IP address resources can be improved.

### Embodiment 2

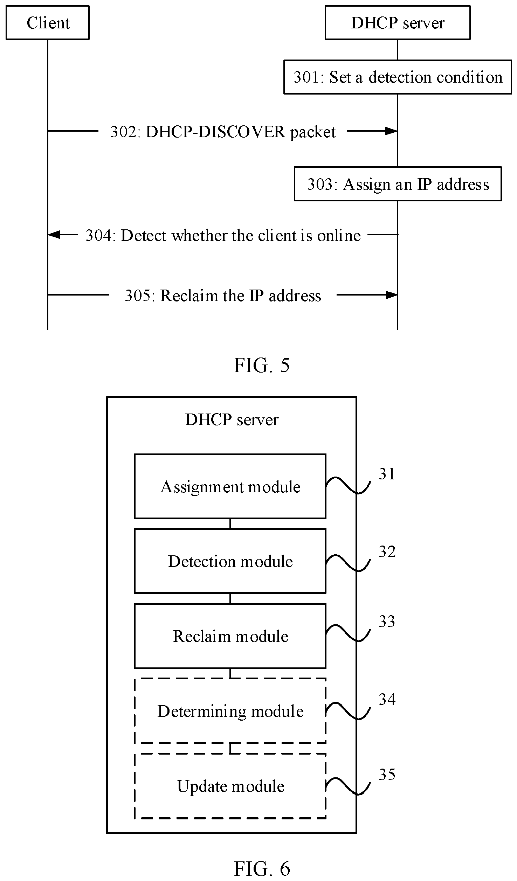

FIG. 4 is a schematic diagram of another application scenario according to an embodiment of this application. The application scenario includes a DHCP server 21, a DHCP relay device 22, and a client 23. During specific implementation of the embodiments of this application, the client 23 may be a device such as a computer, a smartphone, a telephone set, or a cable television set-top box. It should be noted that in actual application, there may be one or more DHCP servers and one or more clients. The application scenario shown in FIG. 4 is described by using an example of one DHCP server 21, one DHCP relay device 22, and one client 23. With reference to the application scenario shown in FIG. 4, the following describes the embodiments of this application. Refer to FIG. 5.

Step 301: Set a detection condition.

Step 302: A client broadcasts a DHCP-DISCOVERY packet.

Specifically, in this embodiment, the client broadcasts the DHCP-DISCOVERY packet to the DHCP relay device that is communicatively connected to the client. Then the DHCP relay device sends the DHCP-DISCOVERY packet to the DHCP server in a unicast form. For a specific sending method, refer to corresponding content in the method corresponding to FIG. 1. Details are not described herein again in this application.

Step 303: A DHCP server assigns an IP address to the client based on the DHCP-DISCOVERY packet.

Step 304: Detect, within a lease term, whether the client is online.

Specifically, in this embodiment, data exchanged between the DHCP server and the client is forwarded in the unicast form by using the DHCP relay device. It should be noted that when the DHCP relay device exists between the DHCP server and the client, in a process of detecting whether the client is online by the DHCP server, an ARP packet cannot be used for detection. In an embodiment, the DHCP server may use a ping packet to detect whether the client is online.

Step 304: After detecting that the client is offline, the DHCP server reclaims the IP address assigned to the client.

In conclusion, according to the address management method provided in this embodiment of this application, the DHCP server can actively detect whether the client is online, to reclaim the IP address in time, thereby effectively improving utilization of a resource of the address pool of the DHCP server.

The foregoing mainly describes the solutions provided in the embodiments of this application from a perspective of interaction between network elements. It may be understood that to implement the foregoing functions, the DHCP server or the like includes corresponding hardware structures and/or software modules for implementing the functions. A person skilled in the art should easily be aware that in combination with the examples described in the embodiments disclosed in this specification, units, algorithms, and steps may be implemented by hardware or a combination of hardware and computer software in the embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, function modules of the DHCP server may be obtained through division based on the foregoing method examples. For example, each function module may be obtained through division based on a corresponding function, or two or more functions may be integrated into one processing module. The integrated module may be implemented in a form of hardware, or may be implemented in a form of a software functional module. It should be noted that in this embodiment of this application, module division is an example, and is merely a logical function division. In actual implementation, another division manner may be used.

When each function module is obtained through division based on a corresponding function, an address management apparatus may be the DHCP server in the foregoing embodiments. As shown in FIG. 6, an address management apparatus may include an assignment module 31, a detection module 32, and a reclaim module 33. The assignment module 31 may be configured to assign an IP address and a lease term to a client, and configured to support a DHCP server in performing S203 and S303 in the foregoing method embodiments. The detection module 32 may be configured to detect, within the lease term, whether the client is online, and configured to support the DHCP server in performing S204 and S304 in the foregoing method embodiments. The reclaim module 33 may be configured to support the DHCP server in performing S205 and S305 in the foregoing method embodiments. Optionally, as shown in FIG. 6, the DHCP server may further include a determining module 34 and an update module 35. The determining module 34 may be configured to support the DHCP server in "determining whether a detection condition is triggered" in the foregoing embodiments. The update module 35 is configured to support the DHCP server in "updating a status of the IP address" in the foregoing embodiments, and support the DHCP server in "setting a priority of the IP address" in the foregoing embodiments. All related content of the steps in the foregoing method embodiments may be cited to functional descriptions of corresponding function modules. Details are not described herein again.

An embodiment of this application further provides a computer-readable storage medium. The computer-readable storage medium stores a computer program. The computer program includes code. The code may be executed by a processor included in the address management apparatus, to perform the steps performed by the DHCP server in the method corresponding to FIG. 2 or FIG. 4.

An embodiment of this application further provides a computer program. When executed by a processor, the computer program performs the steps performed by the DHCP server in the method corresponding to FIG. 2 or FIG. 4. The program may be all or partially stored in a storage medium that is encapsulated with the processor, or may be all or partially stored in a memory that is not encapsulated with the processor.

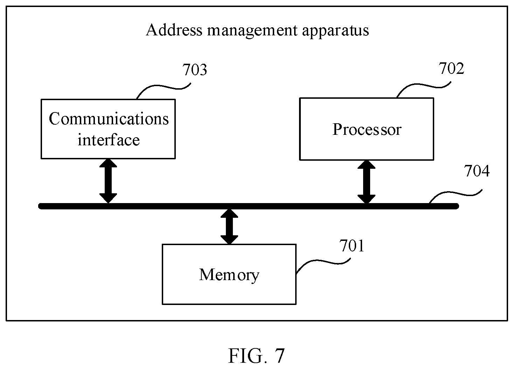

As shown in FIG. 7, the address management apparatus includes a processor 702, a communications interface 703, a memory 701 and a bus 704. The processor 702, the communications interface 703, and the memory 701 are connected to each other by using the bus 704. The memory 701 is configured to store program code. The processor 702 is configured to read the program code from the memory 701, to perform the steps performed by the DHCP server in the method corresponding to FIG. 2 or FIG. 4.

Methods or algorithm steps described in combination with the content disclosed in the embodiments of this application may be implemented by hardware, or may be implemented by a processor by executing a software instruction. The software instruction may include a corresponding software module. The software module may be stored in a random access memory (Random Access Memory, RAM for short), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a mobile hard disk, a compact disc read-only memory (CD-ROM), or any other form of storage medium well-known in the art. For example, a storage medium is coupled to the processor, so that the processor can read information from the storage medium or write information into the storage medium. Certainly, the storage medium may also be a component of the processor. The processor and the storage medium may be located in an ASIC. In addition, the ASIC may be located in the DHCP server or the client. Certainly, the processor and the storage medium may also exist in the DHCP server or the client as discrete components. The processor and the storage medium may be located in the ASIC.

A person skilled in the art should be aware that in the foregoing one or more examples, functions described in the embodiments of this application may be implemented by hardware, software, firmware, or any combination thereof. When the functions are implemented by the software, the functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another place. The storage medium may be any available medium accessible to a general-purpose or dedicated computer.

In the foregoing specific implementations, the objectives, technical solutions, and beneficial effects of the embodiments of this application are further described in detail. It should be understood that the foregoing descriptions are merely specific implementations of the embodiments of this application, but are not intended to limit the protection scope of the embodiments of this application. Any modification, equivalent replacement, or improvement made based on technical solutions of the embodiments of this application shall fall within the protection scope of the embodiments of this application.

## Claims

1. An address management method, comprising:
assigning, by a DHCP server, an IP address and a lease term to a client;
detecting, by the DHCP server within the lease term, whether the client is online; and
reclaiming, by the DHCP server after detecting that the client is offline, the IP address assigned to the client.

2. The method according to claim 1, wherein the detecting, by the DHCP server within the lease term, whether the client is online comprises:
determining, by the DHCP server, that a detection condition is triggered within the lease term, and sending a ping packet to the client, wherein a destination address of the ping packet is the IP address assigned by the DHCP server to the client; and determining, by the DHCP server, that the client is offline if a ping reply packet returned by the client is not received within a preset time; or
the detecting, by the DHCP server within the lease term, whether the client is online comprises: determining, by the DHCP server, that a detection condition is triggered within the lease term, and sending an address resolution protocol ARP packet to the client; and determining, by the DHCP server, that the client is offline if an ARP reply packet returned by the client is not received within a preset time.

3. The method according to claim 2, wherein the determining, by the DHCP server, that a detection condition is triggered within the lease term comprises:
when a renewal packet sent by the client is not received at a renewal moment in the lease term, determining, by the DHCP server, that the detection condition is triggered within the lease term; or
when a current moment is a preset detection time point in the lease term, determining, by the DHCP server, that the detection condition is triggered within the lease term, wherein the preset detection time point is a start moment of the lease term or any moment in the lease term.

4. The method according to any one of claims 1 to 3, wherein after the assigning, by a DHCP server, an IP address and a lease term to a client, the method further comprises:
updating, by the DHCP server, a status of the IP address assigned to the client and stored in the DHCP server to unavailable; or
setting, by the DHCP server, the IP address assigned to the client and stored in the DHCP server to a high priority.

5. The method according to any one of claims 1 to 3, wherein after the reclaiming, by the DHCP server after detecting that the client is offline, the IP address assigned to the client, the method further comprises:
after the IP address assigned to the client is reclaimed, updating, by the DHCP server, a status of the IP address assigned to the client and stored in the DHCP server to available; or
after the IP address assigned to the client is reclaimed, setting, by the DHCP server, the IP address assigned to the client and stored in the DHCP server to a low priority.

6. An address management apparatus, comprising:
an assignment module, configured to assign an IP address and a lease term to a client;
a detection module, configured to detect, within the lease term, whether the client is online; and
a reclaim module, configured to reclaim, after detecting that the client is offline, the IP address assigned to the client.

7. The apparatus according to claim 6, wherein the detection module is specifically configured to: determine that a detection condition is triggered within the lease term, and send a ping packet to the client, wherein a destination address of the ping packet is the IP address assigned by the assignment module to the client; and determine that the client is offline if a ping reply packet returned by the client is not received within a preset time; or
the detection module is specifically configured to: determine that a detection condition is triggered within the lease term, and send an address resolution protocol ARP packet to the client; and determine that the client is offline if an ARP reply packet returned by the client is not received within a preset time.

8. The apparatus according to claim 7, wherein the apparatus further comprises a determining module, and
the determining module is configured to: when a renewal packet sent by the client is not received at a renewal moment in the lease term, determine that the detection condition is triggered within the lease term; or
the determining module is configured to: when a current moment is a preset detection time point in the lease term, determine that the detection condition is triggered within the lease term, wherein the preset detection time point is a start moment of the lease term or any moment in the lease term.

9. The apparatus according to any one of claims 6 to 8, wherein the apparatus further comprises an update module, and
the update module is configured to update a status of the IP address assigned to the client and stored in the update module to unavailable; or
the update module is configured to set the IP address assigned to the client and stored in the update module to a high priority.

10. The apparatus according to any one of claims 6 to 8, wherein the apparatus further comprises an update module, and
the update module is configured to: after the IP address assigned to the client is reclaimed, update a status of the IP address assigned to the client and stored in the update module to available; or
the update module is configured to: after the IP address assigned to the client is reclaimed, set the IP address assigned to the client and stored in the update module to a low priority.

11. A computer-readable storage medium, storing a computer program, wherein the computer program comprises code, and the code may be executed by a processor to perform the method according to any one of claims 1 to 5.
